# EUROPÄISCHE PATENTSCHRIFT

(11) **EP 1 761 706 B1**
(45) Veröffentlichungstag und Bekanntmachung des Hinweises auf die Patenterteilung: **15.05.2013**
(21) Anmeldenummer: 05759042.4
(22) Anmeldetag: 15.06.2005
(51) Int. Cl.: F04C 15/00

(54) **PUMPE**
PUMP
POMPE

(30) Priorität: 24.06.2004 DE 102004030474
(43) Veröffentlichungstag der Anmeldung: 14.03.2007
(73) Patentinhaber: ixetic Hückeswagen GmbH, 42499 Hückeswagen (DE)
(72) Erfinder: SCHULZ-ANDRES, Heiko, 42499 Hückeswagen (DE); KAMARYS, Dirk, 47877 Willich (DE); FROWEIN, Kornelia, 42929 Wermelskirchen (DE)
(86) Internationale Anmeldenummer: PCT/DE2005/001058
(87) Internationale Veröffentlichungsnummer: WO 2006/000181

(56) Entgegenhaltungen:
- EP-A- 0 255 920
- DE-A1- 3 506 629
- DE-A1- 4 033 456
- DE-A1- 4 412 980
- PATENT ABSTRACTS OF JAPAN Bd. 1999, Nr. 12, 29. Oktober 1999 (1999-10-29) & JP 11 201063 A (ZEXEL:KK), 27. Juli 1999 (1999-07-27)

## Beschreibung

Die Erfindung betrifft eine Pumpe, beispielsweise zur Förderung von Schmieröl eines Verbrennungsmotors, insbesondere eine mehrhubige Flügelzellenpumpe, mit einem Rotor und in Rotorschlitzen zumindest radial verschiebbaren Flügeln, die mit ihren Flügelköpfen an einer Hubkontur entlang gleiten, wobei die Hubkontur unter anderem eine radiale Auslassöffnung aufweist, welche durch eine Ventileinrichtung verschließbar ist.

Derartige Pumpen sind bekannt. So ist beispielsweise eine mehrhubige Flügelzellenpumpe bekannt, deren Hubkontur aus Blech dargestellt ist. Bei dieser Pumpe wird die schaltbare zweite Förderstufe bei niedriger Temperatur des Schmieröls mit dem Saugbereich der ersten Förderstufe über eine radiale Nut in der Blechkontur kurzgeschlossen, so dass bei niedriger Temperatur nur die erste Stufe der doppelhubigen Flügelzellenpumpe fördert. Bei Temperaturerhöhung wird die Schaltstufe, d. h. die Stufe 2 der Flügelzellenpumpe, durch ein temperaturabhängig verstellbares Element verschlossen, so dass auch die zweite Stufe der doppelhubigen Flügelzellenpumpe unter Druck das Schmieröl in die Schmierölkanäle des Verbrennungsmotors fördert. Durch das temperaturabhängige Schalten wird also diese radiale Nut verschlossen und der Volumenstrom über ein Rückschlagventil dem Systemdruckbereich zugeführt. Das temperaturabhängig verstellbare Ventil wird hierbei mit Hilfe eines Kegelsitzes geöffnet bzw. verschlossen. Nachteilig an dieser Lösung sind zum einen die kleinen erreichbaren Strömungsquerschnitte, wodurch ein zu großer Druckabfall erzeugt wird. Zum zweiten führt die Umströmung des Ventilsitzes für einen Teil des Volumenstromes zu einer Strömung, die dem eigentlichen Saugvolumenstrom entgegen gerichtet ist. Diese Strömungen führen zu Verlusten, die im Saugbereich einen frühen Beginn der Kavitation bedingen. Weiterhin ist die Herstellung des Sitzventils sehr aufwendig und somit mit Kosten verbunden.

Die DE 3506629 A1 wind als nächstliegenden Stand der Technik angesehen.

Es ist also Aufgabe der Erfindung, ein temperaturabhängig verstellbares Ventil zu entwickeln, welches kostengünstig die Verstellfunktion erfüllt und geringste Strömungswiderstände sowie eine gerichtete Auslassströmung in Richtung der Saugströmung bietet.

Die Aufgabe wird erfüllt durch eine Pumpe, beispielsweise zur Förderung von Schmieröl eines Verbrennungsmotors, insbesondere eine mehrhubige Flügelzellenpumpe, mit einem Rotor und in Rotorschlitzen zumindest radial verschiebbaren Flügeln, die mit ihren Flügelköpfen an einer Hubkontur entlang gleiten, wobei die Hubkontur unter anderem eine radiale Auslassöffnung aufweist, welche durch eine Ventileinrichtung verschließbar ist, wobei erfindungsgemäß die Ventileinrichtung eine elastisch verformbare Ventilzunge aufweist, die tangential außen an der Hubkontur so angebracht ist, dass die Ventilzunge in geöffneter Position in Strömungsrichtung eine gerichtete Auslassströmung in Richtung der Saugströmung ermöglicht, indem im Wesentlichen die Ventilzunge parallel zur Auslassströmung eine Strömungsleitfläche darstellt. Vorzugsweise nimmt die Ventilzunge im geschlossenen Zustand außen an der Hubkontur die Konturform im Bereich der Auslassöffnung ein. Bevorzugt wird auch eine Pumpe, bei welcher die Ventilzunge durch die Federkraft des elastischen Zungenmaterials geöffnet ist. Das hat den Vorteil, dass das geöffnete Ventil einen minimalen Strömungswiderstand darstellt und damit der hydraulische Wirkungsgrad und der mechanische Wirkungsgrad der Pumpe wesentlich verbessert werden kann.

Bevorzugt wird die Ventilzunge durch einen temperaturabhängig verstellbaren Aktor und/oder eine zusätzliche Feder in der Schließposition von außen gegen die Hubkontur gepresst. Vorzugsweise sind der temperaturabhängig verstellbare Aktor und die zusätzliche Feder hinsichtlich der durch diese beiden Elemente erzeugten Verstellwege und -kräfte in Reihe geschaltet. Weiterhin soll der temperaturabhängig verstellbare Aktor bei Temperaturerhöhung die Ventileinrichtung schließen.

Auch wird eine Pumpe bevorzugt, bei welcher die zusätzliche Feder bis zu einem Erreichen eines bestimmten Druckes die Ventileinrichtung geschlossen halten kann. Das hat den Vorteil, dass neben der temperaturabhängig verstellbaren Ventileinrichtung auch eine Druckbegrenzungsfunktion realisiert werden kann. Weiterhin wird eine Pumpe bevorzugt, bei welcher die Federkraft der Ventilzunge gegen die Federkraft der zusätzlichen Feder wirksam ist. Außerdem wird eine Pumpe bevorzugt, bei welcher der temperaturabhängig verstellbare Aktor die Federvorspannkraft der zusätzlichen Feder beeinflusst. Das hat den Vorteil, dass entsprechend der Auslegung von Aktor und zusätzlicher Feder verschiedene Druckbegrenzungsstufen einstellbar sind. Weiterhin wird eine Pumpe bevorzugt, bei welcher die Ventileinrichtung sowohl die Funktion eines temperaturabhängig verstellbaren Ventils als auch die Funktion eines Druckbegrenzungsventils ausüben kann. Das hat den Vorteil, dass sowohl bei Temperaturerhöhung die zweite Stufe hinzugeschaltet werden kann, als auch zusätzlich bei Überschreiten eines Maximaldruckes die zweite Stufe wieder abgeschaltet werden kann.

Eine weitere Pumpe zeichnet sich dadurch aus, dass die Ventilzunge an der Seite der radialen Auslassöffnung der Hubkontur befestigt ist, welche zuerst von den Flügeln überstrichen wird. Das hat den Vorteil, dass bei Öffnen der Ventilzunge diese strömungsgünstig eine Strömungsleitfläche in Strömungsrichtung darstellt und damit eine möglichst verlustarme Strömungsform hergestellt werden kann.

Weiterhin wird eine Pumpe bevorzugt, bei welcher die Hubkontur aus Blech und auch die Ventilzunge aus Blech, vorzugsweise einem dünnen Federstahl, ausgeführt sind und vorzugsweise durch Laserschweißen, aber auch Entladungsschweißen oder Löten aneinander befestigt sind.

Bevorzugt wird auch eine Pumpe, bei welcher der temperaturabhängig verstellbare Aktor auf einer Seite mit der Ventilzunge verbunden ist und sich auf der anderen Seite gegen die zusätzliche Druckfeder abstützt. Weiterhin soll die zusätzliche Druckfeder bei eingefahrenem temperaturabhängig verstellbaren Aktor die Ventileinrichtung mit einer minimalen Vorspannung geschlossen halten (Minimaldruckbegrenzung). Das hat den Vorteil, dass bei niedrigen Temperaturen ein Minimaldruck, beispielsweise von 2bar, zur verlustarmen Schmierung aufrechterhalten werden kann und bei Überschreiten des Druckes die zweite Stufe in den drucklosen Umlauf geschaltet werden kann und somit Energie eingespart werden kann.

Weiterhin wird eine Pumpe bevorzugt, bei welcher die zusätzliche Feder bei ausgefahrenem temperaturabhängig verstellbaren Aktor die Ventileinrichtung mit einer maximalen Vorspannung geschlossen hält (Maximaldruckbegrenzung). Das hat den Vorteil, dass z. B. bei hoher Temperatur ein Schmieröldruck von beispielsweise 5bar erreicht werden kann, bevor die zweite Druckstufe zur Einsparung von Energie in den Umlaufdruck geschaltet wird.

Eine weitere Pumpe zeichnet sich dadurch aus, dass die Ventilzunge mittels eines Formelementes, ggf. mit einer zusätzlichen Gelenk- oder Scharniereinrichtung, vom temperaturabhängig verstellbaren Aktor gegen die Hubkontur gepresst werden kann. Das hat den Vorteil, dass durch die Formgebung des Elementes eine absolut formgerechte Abdichtung der Ventilzunge sichergestellt wird. Insbesondere wird daher eine Pumpe bevorzugt, bei welcher das Formelement in seiner Anlagefläche der Außenkontur der Hubkontur entspricht. Weiterhin wird eine Pumpe bevorzugt, bei welcher die Ventilzunge aus einem Thermo-Bimetall hergestellt ist. Das hat den Vorteil, dass durch eine geschickte Abstimmung mit dem Aktorschaltpunkt eine große Kraft zum Öffnen der zweiten Stufe zur Verfügung steht und eine geringe Kraft beim Schließen dem Aktor entgegen wirkt.

Weiterhin wird eine Pumpe bevorzugt, bei welcher die Ventilzunge aus einem Blechstreifen in Form einer so genannten Übertotpunktfeder mit Umschnappeffekt hergestellt ist. Das hat den Vorteil, dass sich der Gegendruck bei drucklosem Umlauf der zweiten Stufe noch einmal deutlich absenken lässt, was eine Verbesserung des hydraulisch mechanischen Wirkungsgrads zur Folge hätte. Dabei würde die Kraft zum Schließen der Ventileinrichtung der Aktor aufbringen, während die Kraft zum Öffnen durch den statischen und dynamischen Druck der zweiten Stufe erzeugt würde.

Die Erfindung wird nun anhand der Figuren beschrieben.

In Figur 1 ist eine erfindungsgemäße Pumpe im Querschnitt dargestellt.

In Figur 2 ist vergrößert das Detail X aus Figur 1 dargestellt.

In Figur 3 ist vergrößert das Detail Y, die Aufsicht auf den Aktor und die Ventilzunge, dargestellt.

In Figur 4 ist ein Aktor mit einem fest integrierten Formelement dargestellt.

In Figur 5 ist ein Aktor mit einem beweglichen Formelement dargestellt.

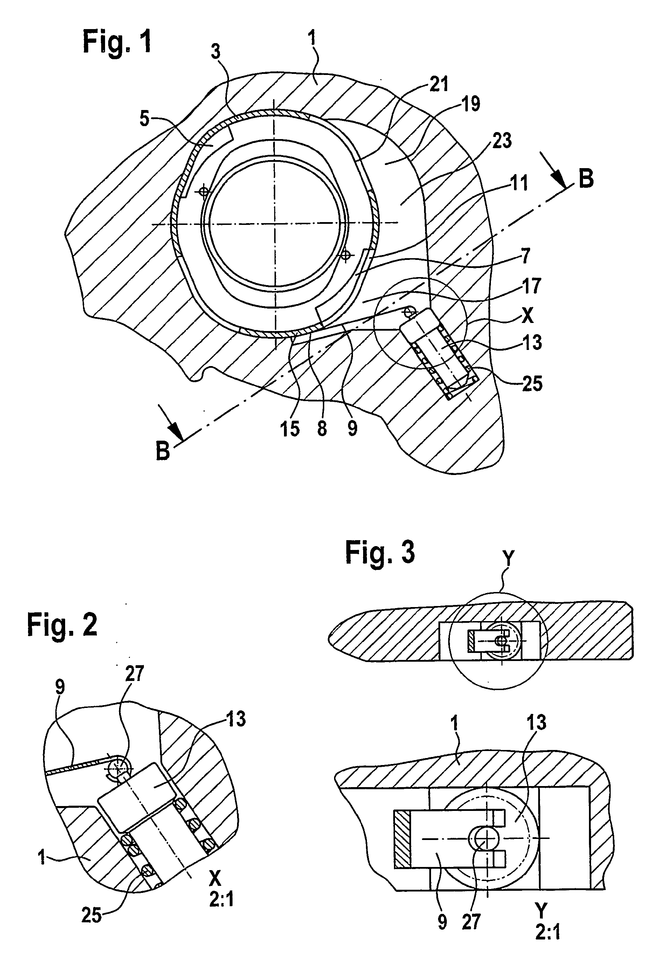

In Figur 1 ist im Querschnitt eine erfindungsgemäße zweihubige Flügelzellenpumpe dargestellt. In einem Pumpengehäuse 1 ist eine Hubkontur 3 in Form eines Blechringes dargestellt. Die Hubkontur 3 enthält einen ersten Druckauslass 5 und einen zweiten Druckauslass 7, wobei an dem Druckauslass 7 ein Federzungenventil 8 angeordnet ist. Im Bereich des Druckauslasses 7 ist die Hubkontur 3 durch eine radiale Auslassöffnung 11 unterbrochen. Diese Auslassöffnung 11 wird durch die Ventilzunge 9 verschlossen, wenn der temperaturabhängig verstellbare Aktor 13 ausfährt und die Ventilzunge 9 gegen den Hubkonturring 3 presst. Die Ventilzunge 9 ist im Bereich 15 an dem Hubkonturring 3 befestigt, so dass im hier dargestellten geöffneten Zustand des Zungenventils eine ungehinderte Strömung durch die Auslassöffnung 11 in den Umströmungsbereich 17 der Pumpe erfolgen kann. Die Abströmung aus dem Bereich 17, wobei die Ventilzunge 9 hier als Strömungsleitwand fungiert, wird im Bereich 19 des Umströmungskanals 23, welcher den Konturring 3 umgibt, durch eine radiale Ansaugöffnung 21 im Konturring 3 wieder der eigentlichen Rotationsgruppe der doppelhubigen Flügelzellenpumpe zugeführt. Die weiteren Elemente einer doppelhubigen Flügelzellenpumpe wie der Rotor und die Flügel sind hier nicht dargestellt, sind aber aus dem Stand der Technik bekannt und sollen zur Vereinfachung hier nicht weiter erläutert werden. Für die Erfindung wesentlich ist, dass zur Reduzierung der Strömungswiderstände und Optimierung der Strömungsrichtung in dem Bereich 17 des Umströmungskanals 23 an dem Hubkonturring 3 aus Blech die Ventilzunge 9 aus einem dünnen Federblech durch beispielsweise Laserschweißung im Bereich 15 befestigt ist. Die Befestigung dieser Ventilzunge erfolgt also an der Seite der Auslassöffnung11 und des Auslassbereiches 7 der Hubkontur 3, die zuerst von den Flügeln in Drehrichtung überstrichen wird. Hierdurch wird bei geöffnetem Zungenventil die Strömung gerichtet in den Saugkanal 23 eingelassen. Somit ist bei geöffnetem Zungenventil der komplette Kanalquerschnitt im Bereich 17 für die Strömung vorhanden. Daraus erfolgt ein minimaler Strömungswiderstand.

Zum Verschließen der Auslassöffnung 11 ist der temperaturabhängig verstellbare Aktor 13 vorgesehen, welcher hier in Figur 1 direkt mit der Ventilzunge 9 verbunden ist. Auf seiner anderen Seite stützt sich der Aktor 13 an einer zusätzlichen Feder 25 ab. Die Feder 25 wird so gewählt, dass bei eingefahrenem Aktor 13 eine minimale Vorspannung durch das Ventil in geschlossenem Zustand vorliegt, wie hier in Figur 1 jetzt nicht dargestellt. Das bedeutet, dass der Aktor eingefahren ist, aber die zusätzliche Feder 25 mit samt dem Aktor die Federzunge 9 gegen die Auslassöffnung 11 presst. Die minimale Vorspannung kann dabei beispielsweise einem Auslassdruck von 2 bar entsprechen, und sobald dieser Auslassdruck in der Pumpe überschritten wird, kann der Druck das Federzungenventil in die in Figur 1 dargestellte Öffnungsposition drücken und damit den Aktor 13 gegen die Federvorspannkraft der Feder 25 in die hier dargestellte Position drücken. In der Figur 1 ist also der Einstellpunkt der Minimaldruckbegrenzung überschritten. Das Kräftegleichgewicht an der Ventileinrichtung besteht also hier in Figur 1 aus der Vorspannung der Druckfeder 25 abzüglich der Rückstellwirkung durch die Federkraft der Ventilzunge 9. Die Druckkraft des Hydraulikmediums im Auslassbereich 7 und ggf. durch Strömung aufgebrachte Kräfte wirken hierbei unterstützend in Öffnungsrichtung. Wenn nun der Aktor 13 durch Temperaturerhöhung des Schmieröls ausfahren würde, wird auf der einen Seite die Federzunge 9 des Zungenventils gegen den Hubring 3 gepresst, auf der anderen Seite wird aber auch durch den ausfahrenden Aktor 13 die Vorspannkraft der Feder 25 erhöht und dabei die Auslassöffnung 11 der schaltbaren Pumpenstufe verschlossen. Da die Vorspannung der Feder 25 nun erhöht worden ist, kann beispielsweise erst bei einem Druck von 5 bar der entsprechende Förderdruck die Federzunge 9 mitsamt dem ausgefahrenen Aktor 13 gegen die Kraft der Feder 25 wieder in Öffnungsrichtung drücken und dadurch die Funktion der Maximaldruckbegrenzung ausüben. Erfindungsgemäß ist also hier eine Überlagerung der Funktionen von zwei verschiedenen Druckbegrenzungsstufen mit einer Temperaturverstellbarkeit durch Schließen der Auslassöffnung 11 bei Temperaturerhöhung kombiniert. Die Maximaldruckbegrenzung von beispielsweise 5 bar wird durch den Aktor 13 durch den so genannten Effekt des Überhubes realisiert, da der Aktor bei weiter ansteigenden Temperaturen weiter ausfährt und somit die Vorspannung der zusätzlichen Feder 25 weiter erhöht, bis beispielsweise diese Federkraftvorspannung dem Maximaldruck von 5 bar entspricht. Die Auslegung der exakten Temperaturverstell- und Druckpunkte kann erfindungsgemäß natürlich variiert werden für die unterschiedlichen Anforderungen in den Kraftfahrzeugen. Ein Vorteil dieser erfindungsgemäßen Ventileinrichtung ist gegenüber dem Stand der Technik, dass eine dort vorhandene Rückstellfeder entfallen kann. Weiterhin kann die Auslegung der Feder 25, die hier auch die Funktion der Überhubfeder wahrnimmt, in ihrer Dimensionierung kleiner sein, da es mit diesem System zulässig ist, bereits bei niedrigeren Drücken die Ventileinrichtung zu öffnen.

Wenn nun ein Verbrennungsmotor nach entsprechender Erwärmung (beide Druckstufen der doppelhubigen Flügelzellenpumpe haben gefördert) abgestellt wird, so führt die Reduzierung der Temperatur zum Einfahren des Aktors 13. Die hierfür notwendigen Rückstellkräfte werden von der Druckfeder 25 aufgebracht, die zunächst den Aktor 13 zusammendrückt. Da die Federvorspannung der Feder 25 mit dem Einfahren des Aktors 13 abnimmt, kann sich eine hysterese bedingte Zwischenposition einstellen. Dies ist jedoch für den nächsten Kaltstart der Pumpe förderlich, da die höhere Vorspannung zu einem Start mit beiden Pumpenstufen führt. Sobald die zweite Pumpenstufe Druck aufbaut, wird die Aktorhysterese überwunden, und der Aktor fährt ganz ein.

Die Positionierung des Aktors 13 zu der Federzunge 9 erfolgt in Abhängigkeit eines Kräftediagramms. So kann es sinnvoll sein, den Aktor 13 so zu platzieren, dass er die Federzunge 9 gegen den Hubring 3 verspannt. Hierzu ist es notwendig, eine Lagerung zwischen dem Aktor 13 und der Federzunge 9 darzustellen, wie in Figur 2 gezeigt. So ist es möglich, über beispielsweise eine Kugel 27 am Aktor 13 und eine entsprechende Aufnahme an der Federzunge 9 diese formschlüssige Lagerung herzustellen. In Figur 3 ist die entsprechende Lagerung zwischen Aktor 13 und Federzunge 9 in Aufsicht dargestellt.

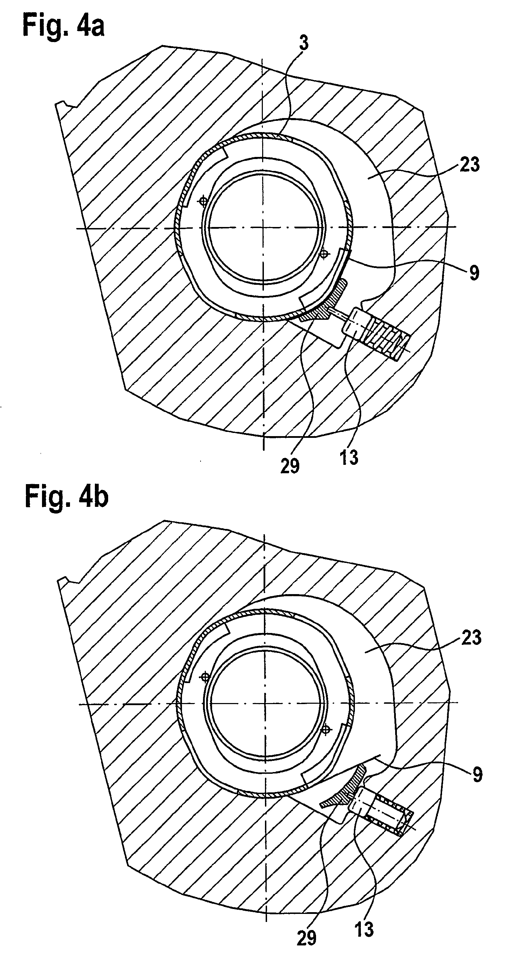

In einer weiteren erfindungsgemäßen Variante wird die Federzunge 9 mit Hilfe eines zusätzlichen Formteiles 29 (Figur 4a und Figur 4b) an den Hubring 3 gepresst. Dieses Formteil 29 kann aus verschiedenen Materialien, vorzugsweise aus Kunststoff, hergestellt werden und entspricht mit seiner Anlagefläche für die Federzunge 9 der Außenkontur des Hubringes 3. Die Federzunge 9 wird dann durch das Formelement 29 umgebogen und an den Konturring 3 angepresst. Das Formteil 29 ist mit dem Aktor 13 starr verbunden.

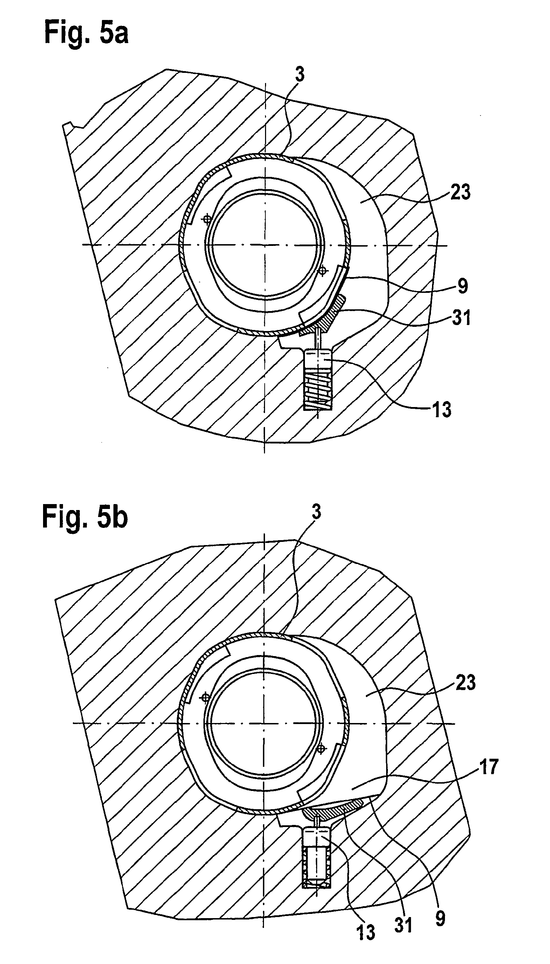

In Figur 5 ist eine Ausführungsvariante dargestellt, welche aus Bauraumgründen notwendig werden könnte. Hierbei ist das Formteil 31 beweglich zum Aktor 13 gelagert und kann damit vom Hubkonturring 3 weggedreht werden. Dadurch ergibt sich ein völlig geöffneter Strömungsquerschnitt im Abströmbereich 17 der Ventileinrichtung. Bei beiden Ausführungsformen in den Figuren 4 und 5 wird aber durch die Federzunge 9, welche ein tangentiales Strömungsleitblech für die abfließende Strömung darstellt, eine Energie sparende Abströmung in den Saugbereich 23 der doppelhubigen Flügelzellenpumpe sichergestellt.

Eine weitere erfindungsgemäße Alternative lässt das Formteil 29 bzw. 31 die Auslassöffnung 7 direkt ohne Zwischenschaltung einer Federzunge 9 verschließen bzw. öffnen. Zur Erzielung einer entsprechenden Dichtwirkung kann dazu das Formteil 29 bzw. 31 aus einem elastomeren Werkstoff dargestellt sein.

### Bezugszeichenliste

| | |
|---|---|
| 1 | Pumpengehäuse |
| 3 | Hubkontur |
| 5 | 1. Druckauslass |
| 7 | 2. Druckauslass |
| 8 | Federzungenventil |
| 9 | Ventilzunge |
| 11 | radiale Auslassöffnung |
| 13 | temperaturabhängig verstellbarer Aktor |
| 15 | Befestigungsbereich Ventilzunge |
| 17 | Umströmungsbereich Hubkontur |
| 19 | Ansaugbereich Umströmungskanal |
| 21 | radiale Ansaugöffnung |
| 23 | Umströmungskanal |
| 25 | zusätzliche Feder |
| 27 | Kugellagerung am Aktor |
| 29 | zusätzliches Formteil am Aktor |
| 31 | beweglich gelagertes Formteil |

## Patentansprüche

1. Pumpe, wie mehrhubige Flügelzellenpumpe, mit einem Rotor und in Rotorschlitzen zumindest radial verschiebbaren Flügeln, die mit ihren Flügelköpfen an einer Hubkontur (3) entlang gleiten, wobei die Hubkontur (3) unter anderem eine radiale Auslassöffnung (7) aufweist, welche durch eine Ventileinrichtung (8) verschließbar ist, **dadurch gekennzeichnet, dass** die Ventileinrichtung (8) eine elastisch verformbare Ventilzunge (9) aufweist, die tangential außen an der Hubkontur (3) so angeordnet ist, dass die Ventilzunge (9) in geöffneter Position in Strömungsrichtung eine gerichtete Auslassströmung in Richtung der Saugströmung um die Hubkontur (3) herum ermöglicht, wobei die Ventilzunge (9) im Wesentlichen parallel zur Auslassströmung eine Strömungsleitfläche bildet.

2. Pumpe nach Anspruch 1, **dadurch gekennzeichnet, dass** die Ventilzunge (9) im geschlossenen Zustand die Form der Hubkontur (3) im Bereich der radialen Auslassöffnung (7) einnimmt.

3. Pumpe nach Anspruch 1 oder Anspruch 2, **dadurch gekennzeichnet, dass** die Ventilzunge (9) durch die Federkraft des elastischen Zungenmaterials geöffnet ist.

4. Pumpe nach Anspruch 1 bis 3, **dadurch gekennzeichnet, dass** die Ventilzunge (9) durch einen temperaturabhängig verstellbaren Aktor (13) und/oder durch eine zusätzliche Feder (25) in der Schließposition von außen gegen die Hubkontur (3) gepresst wird.

5. Pumpe nach Anspruch 4, **dadurch gekennzeichnet, dass** der temperaturabhängig verstellbare Aktor (13) und die zusätzliche Feder (25) hinsichtlich der durch diese beiden Elemente erzeugten Verstellwege und -kräfte in Reihe geschaltet sind.

6. Pumpe nach Anspruch 4 oder 5, **dadurch gekennzeichnet, dass** der Aktor (13) bei Temperaturerhöhung die Ventileinrichtung (8) schließt.

7. Pumpe nach Anspruch 4 oder 5 oder 6, **dadurch gekennzeichnet, dass** die zusätzliche Feder (25) bis zum Erreichen eines bestimmten Druckes die Ventileinrichtung (8) geschlossen halten kann.

8. Pumpe nach einem der vorhergehenden Ansprüche 4-7, **dadurch gekennzeichnet, dass** die Federkraft der Ventilzunge (9) gegen die Federkraft der zusätzlichen Feder (25) wirksam ist.

9. Pumpe nach einem der vorhergehenden Ansprüche 4-8, **dadurch gekennzeichnet, dass** der temperaturabhängig verstellbare Aktor (13) die Federvorspannkraft der zusätzlichen Feder (25) beeinflusst.

10. Pumpe nach einem der vorhergehenden Ansprüche, **dadurch gekennzeichnet, dass** die Ventileinrichtung (8) sowohl die Funktion eines temperaturabhängig verstellbaren Ventils, als auch die Funktion eines Druckbegrenzungsventils ausüben kann.

11. Pumpe nach einem der vorhergehenden Ansprüche, **dadurch gekennzeichnet, dass** die Ventilzunge (9) an der Seite der radialen Auslassöffnung (7) der Hubkontur (3) befestigt ist, welche zuerst von den Flügeln in Drehrichtung überstrichen wird.

12. Pumpe nach einem der vorhergehenden Ansprüche, **dadurch gekennzeichnet, dass** die Hubkontur (3) aus Blech und auch die Ventilzunge (9) aus Blech, vorzugsweise einem dünnen Federstahl, ausgeführt sind und vorzugsweise durch Laserschweißen, aber auch durch Entladungsschweißen oder Löten aneinander befestigt sind.

13. Pumpe nach einem der vorhergehenden Ansprüche 4-12, **dadurch gekennzeichnet, dass** der temperaturabhängig verstellbare Aktor (13) auf einer Seite mit der Ventilzunge (9) verbunden ist und sich auf der anderen Seite gegen die zusätzliche Feder (25) abstützt.

14. Pumpe nach einem der vorhergehenden Ansprüche 4-13, **dadurch gekennzeichnet, dass** die zusätzliche Feder bei eingefahrenem temperaturabhängig verstellbaren Aktor (13) die Ventileinrichtung (8) mit einer minimalen Vorspannung geschlossen hält (Minimaldruckbegrenzung).

15. Pumpe nach einem der vorhergehenden Ansprüche 4-14, **dadurch gekennzeichnet, dass** die zusätzliche feder (25) bei ausgefahrenem temperaturabhängig verstellbaren Aktor (13) die Ventileinrichtung (8) mit einer maximalen Vorspannung geschlossen hält (Maximaldruckbegrenzung).

16. Pumpe nach einem der vorhergehenden Ansprüche, **dadurch gekennzeichnet, dass** die Ventilzunge (9) mittels eines Formelements, ggf. mit einer zusätzlichen Gelenk- oder Schamiereinrichtung, vom temperaturabhängig verstellbaren Aktor (13) gegen die Hubkontur (3) gepresst werden kann.

17. Pumpe nach Anspruch 16, **dadurch gekennzeichnet, dass** das Formelement (29, 31) in seiner Anlagefläche der Außenkontur der Hubkontur (3) entspricht.

18. Pumpe nach einem der vorhergehenden Ansprüche, **dadurch gekennzeichnet, dass** die Ventilzunge (9) aus einem Thermo-Bimetall hergestellt ist.

19. Pumpe nach einem der vorhergehenden Ansprüche, **dadurch gekennzeichnet, dass** die Ventilzunge (9) aus einem Blechstreifen in Form einer Übertotpunktfeder mit Überschnappeffekt hergestellt ist.

## Claims

1. Pump, such as a multi-stroke vane cell pump, having a rotor and vanes which are at least radially displaceable in rotor slots, said vanes sliding with their vane heads along a stroke contour (3), wherein the stroke contour (3) comprises, inter alia, a radial outlet opening (7) which can be closed by a valve device (8), **characterised in that** the valve device (8) comprises an elastically deformable valve tongue (9) which is arranged tangentially on the outside of the stroke contour (3) so that the valve tongue (9) allows in the open position in the flow direction a directed outlet flow in the direction of the suction flow around the stroke contour (3), wherein the valve tongue (9) forms a flow guide surface substantially parallel to the outlet flow.

2. Pump according to claim 1, **characterised in that** the valve tongue (9) assumes, in the closed state, the form of the stroke contour (3) in the region of the radial outlet opening (7).

3. Pump according to claim 1 or 2, **characterised in that** the valve tongue (9) is opened by the spring force of the elastic tongue material.

4. Pump according to claims 1 to 3, **characterised in that** the valve tongue (9) is pressed by a temperature dependently adjustable actuator (13) and / or by an additional spring (25) in the closed position from outside against the stroke contour (3).

5. Pump according to claim 4, **characterised in that** the temperature dependently adjustable actuator (13) and the additional spring (25) are arranged in series in relation to the adjustment paths and forces produced by said two elements.

6. Pump according to claim 4 or 5, **characterised in that** the actuator (13) closes the valve device (8) if the temperature increases.

7. Pump according to claim 4 or 5 or 6, **characterised in that** the additional spring (25) can hold the valve device (8) closed until a certain pressure is reached.

8. Pump according to one of the preceding claims 4 - 7, **characterised in that** the spring force of the valve tongue (9) acts against the spring force of the additional spring (25).

9. Pump according to one of the preceding claims 4 - 8, **characterised in that** the temperature dependently adjustable actuator (13) influences the spring pre-tension force of the additional spring (25).

10. Pump according to one of the preceding claims, **characterised in that** the valve device (8) can fulfil both the function of a temperature dependently adjustable valve and also the function of a pressure limiting valve.

11. Pump according to one of the preceding claims, **characterised in that** the valve tongue (9) is fixed to the side of the radial outlet opening (7) of the stroke contour (3), over which the vanes first pass in the rotation direction.

12. Pump according to one of the preceding claims, **characterised in that** the stroke contour (3) is made of sheet metal and also the valve tongue (9) is made of sheet metal, preferably a thin spring steel, and said elements are fixed to each other preferably by laser welding but also by discharge welding or soldering.

13. Pump according to one of the preceding claims 4 - 12, **characterised in that** the temperature dependently adjustable actuator (13) is connected on one side to the valve tongue (9) and on the other side rests against the additional spring (25).

14. Pump according to one of the claims 4 - 13, **characterised in that**, when the temperature dependently adjustable actuator (13) is moved in, the additional spring holds the valve device (8) closed with a minimal pre-tension (minimal pressure limitation).

15. Pump according to one of the preceding claims 4 - 14, **characterised in that**, when the temperature dependently adjustable actuator (13) is moved out, the additional spring (25) holds the valve device (8) closed with a maximal pre-tension (maximal pressure limitation).

16. Pump according to one of the preceding claims, **characterised in that** the valve tongue (9) can be pressed by means of a forming element, possibly with an additional joint or hinge device, by the temperature dependently adjustable actuator (13) against the stroke contour (3).

17. Pump according to claim 16, **characterised in that** the forming element (29, 31) corresponds in its abutment surface to the outer contour of the stroke contour (3).

18. Pump according to one of the preceding claims, **characterised in that** the valve tongue (9) is produced from a thermo bi-metal.

19. Pump according to one of the preceding claims, **characterised in that** the valve tongue (9) is produced from a sheet metal strip in the form of an over top dead centre spring with a snap-over effect.

## Revendications

1. Pompe telle qu'une pompe à palettes à plusieurs courses, avec un rotor et des palettes mobiles au moins radialement dans des fentes de rotor, dont les têtes de palette glissent le long d'un contour de course (3), le contour de course (3) présentant entre autres une ouverture de sortie radiale (7) qui peut être fermée par un dispositif de soupape (8), **caractérisée en ce que** le dispositif de soupape (8) présente une lame de soupape (9) déformable élastiquement disposée tangentiellement à l'extérieur sur le contour de course (3) de sorte que le lame de soupape (9) permette en position ouverte dans le sens d'écoulement un écoulement de sortie dirigé vers l'écoulement d'aspiration autour du contour de course (3), la lame de soupape (9) formant une surface conductrice d'écoulement sensiblement parallèlement à l'écoulement de sortie.

2. Pompe selon la revendication 1, **caractérisée en ce que** la lame de soupape (9) prend à l'état fermé la forme du contour de course (3) dans la zone de l'ouverture de sortie radiale (7).

3. Pompe selon la revendication 1 ou 2, **caractérisée en ce que** la lame de soupape (9) est ouverte par la force de ressort du matériau de lame élastique.

4. Pompe selon l'une quelconque des revendications 1 à 3, **caractérisée en ce que** la lame de soupape (9) est pressée de l'extérieur contre le contour de course (3) par un actionneur (13) réglable en fonction de la température et/ou par un ressort supplémentaire (25) dans la position de fermeture.

5. Pompe selon la revendication 4, **caractérisée en ce que** l'actionneur (13) réglable en fonction de la température et le ressort supplémentaire (25) sont montés en série en ce qui concerne les courses et forces de réglage générées par ces deux éléments.

6. Pompe selon la revendication 4 ou 5, **caractérisée en ce que** l'actionneur (13) ferme le dispositif de soupape (8) lors de l'augmentation de la température.

7. Pompe selon la revendication 4, 5 ou 6, **caractérisée en ce que** le ressort supplémentaire (25) peut maintenir fermé le dispositif de soupape (8) jusqu'à atteindre une pression déterminée.

8. Pompe selon l'une quelconque des revendications précédentes 4 à 7, **caractérisée en ce que** la force de ressort de la lame de soupape (9) agit contre la force du ressort supplémentaire (25).

9. Pompe selon l'une quelconque des revendications précédentes 4 à 8, **caractérisée en ce que** l'actionneur réglable en fonction de la température (13) influe sur la force de précontrainte du ressort supplémentaire (25).

10. Pompe selon l'une quelconque des revendications précédentes, **caractérisée en ce que** le dispositif de soupape (8) peut exercer non seulement la fonction d'une soupape réglable en fonction de la température mais aussi la fonction d'une soupape de limitation de pression.

11. Pompe selon l'une quelconque des revendications précédentes, **caractérisée en ce que** la lame de soupape (9) est fixée sur le côté de l'ouverture de sortie radiale (7) du contour de course (3), laquelle est tout d'abord balayée par les palettes dans le sens de rotation.

12. Pompe selon l'une quelconque des revendications précédentes, **caractérisée en ce que** le contour de course (3) est réalisé en tôle et la lame de soupape (9) est aussi réalisée en tôle, de préférence en acier à ressorts mince et sont fixés de préférence l'un à l'autre par soudage au laser mais aussi par soudage à décharge ou brasage.

13. Pompe selon l'une quelconque des revendications précédentes 4 à 12, **caractérisée en ce que** l'actionneur (13) réglable en fonction de la température est relié d'un côté à la lame de soupape (9) et s'appuie de l'autre côté contre le ressort (25) supplémentaire.

14. Pompe selon l'une quelconque des revendications précédentes 4 à 13, **caractérisée en ce que** le ressort supplémentaire maintient fermé le dispositif de soupape (8) avec une précontrainte minimale lorsque l'actionneur (13) réglable en fonction de la température est rentré.

15. Pompe selon l'une quelconque des revendications précédentes 4 à 14, **caractérisée en ce que** le ressort supplémentaire (25) maintient fermé le dispositif de soupape (8) avec une précontrainte maximale lorsque l'actionneur (13) réglable en fonction de la température est sorti.

16. Pompe selon l'une quelconque des revendications précédentes, **caractérisée en ce que** la lame de soupape (9) peut être pressée à l'aide d'un élément formé, éventuellement avec un dispositif d'articulation ou de charnière supplémentaire, par l'actionneur (13) réglable en fonction de la température contre le contour de course (3).

17. Pompe selon la revendication 16, **caractérisée en ce que** l'élément formé (29, 31) correspond dans sa surface d'appui au contour extérieur du contour de course (3).

18. Pompe selon l'une quelconque des revendications précédentes, **caractérisée en ce que** la lame de soupape (9) est fabriquée en une bilame thermique.

19. Pompe selon l'une quelconque des revendications précédentes, **caractérisée en ce que** le lame de soupape (9) est fabriquée en un ruban de tôle sous la forme d'un ressort de dépassement de point mort avec effet de déclic.
